# EUROPEAN PATENT SPECIFICATION

(11) **EP 1 234 715 B1**
(45) Date of publication and mention of the grant of the patent: **20.02.2008**
(21) Application number: 99959421.1
(22) Date of filing: 02.12.1999
(51) Int. Cl.: B60P 7/135

(54) **PLATFORM FOR A TRUCK SEMITRAILER**
LASTPLATTFORM FÜR EINEN SATTELANHÄNGER
PLATE-FORME POUR SEMI-REMORQUE DE CAMION

(43) Date of publication of application: 28.08.2002
(73) Proprietor: Sociedad Anonima Damm, 08025 Barcelona (ES)
(72) Inventor: MARIN, Pedro, E-08025 Barcelona (ES)
(74) Representative: González-Bueno, Pablo
(86) International application number: PCT/ES1999/000392
(87) International publication number: WO 2001/040017

(56) References cited:
- EP-A1- 0 928 753
- DE-A1- 19 806 706
- US-A- 4 056 066
- US-A- 5 967 718

## Description

### Field of the Invention

This invention refers to a platform for truck semitrailers intended for the transport of goods grouped in containers and on pallets.

### Background of the Invention

Platforms for truck semitrailers intended for the transport of goods grouped in containers or on pallets are known with different means to particularly satisfy two functions: permit loading and unloading operations, both from the rear part and sides, as well as to prevent movements of the load during transport.

Known platforms generally respond to specific problems and require either the execution of manual operations to fasten the load or an arrangement inside the truck of compartments to facilitate said fastening or the execution of loading/unloading operations in ways that vary according to the type of goods

In DE-A1-19896706 it is disclosed a platform for truck semitrailers having a specific structure for fastening the load in the vertical direction consisting of a flat framework activated by a linear motor / pneumatic piston-cylinder unit.

This invention is directed to the solution of one or several of the aforementioned disadvantages.

### Summary of the Invention

This invention provides a platform with medium or large capacity, preferably intended for the mass transport of containers or palletised goods, that is, items with relatively standard dimensions, between, for example, plants and distribution centres. In this type of transport, suitable platform structuring is essential to accelerate the loading/unloading operations.

With these goals in mind, according to the primary object of the invention and with respect to a conventionally configured platform, including a prismatic-rectangular frame, delimiting the floor, ceiling and wall spaces, and having a vertically movable structure parallel to the ceiling for fastening the load, the floor or platform base includes four sunken rails, longitudinally arranged to facilitate truck loading/unloading from the rear by means of loading/unloading devices requiring such means. Likewise, it includes two protruding longitudinal sleepers next to the side ends of the base, both to serve as a means of laterally retaining the containers or pallets or as a guide in their arrangement inside the truck. The base also includes in its central part, two rows of hydraulically triggered gudgeons to displace vertically, above and below the base for the object of delimiting the side retaining means and guidance of the containers or pallets, optionally available as devices additional to the mentioned sleepers.

According to the second object of the invention and for platforms using tarpaulins or other flexible items as means of closing/opening side walls, to facilitate loading/unloading operations through them, the platform base includes hydraulically activated brackets to tighten/untighten said tarpaulins, co-operating with the webbing or equivalent items arranged over them.

Other characteristics and advantages of this invention will transpire from the following detailed description of an illustrative embodiment, which is in no way limiting, of its object in relation to the attached drawings.

### Description of the Figures

Figure 1 is a schematic transverse section view of a platform for truck semitrailers, known in the state-of-the-art.
Figure 2 is a schematic transverse section view of a platform for truck semitrailers, having a vertically movable structure for fastening the load.
Figures 3 and 4 are schematic transverse section views of a platform for truck semitrailers, according to the first object of this invention.
Figures 5 and 6 are transverse section views of a platform for truck semitrailers, according to the second object of this invention.
Figures 7a and 7b are transverse section views of a specific embodiment of the brackets to tighten/untighten the side tarpaulins of the truck.
Figure 8 is a plan view of a specific embodiment of the load fastening structure.
Figure 9 is a perspective view of the platform for truck semitrailers with its side tarpaulins tightened.
Figure 10 is a diagram of the hydraulic circuits used to activate the load fastening structure, the central rows of gudgeons and the pistons co-operating with the brackets to tighten/untighten side tarpaulins.

### Detailed Description of the Invention

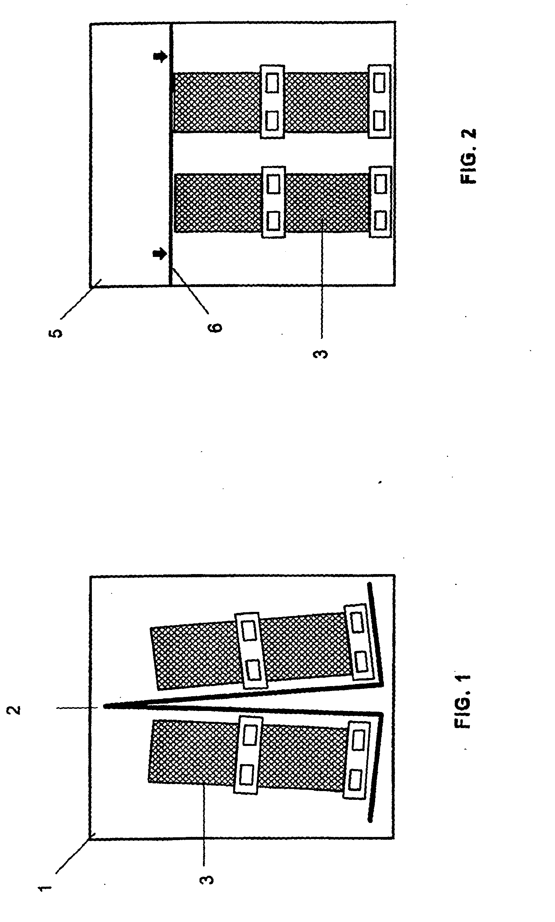

Figure 1 is a schematic transverse section view of a known platform 1, frequently used in the soft-drinks and beer sectors in which the platforms for truck semitrailers, object of this invention, are especially applicable, and whose most characteristic components are, on the one hand, the use of a rib 2 to fasten the goods 3 and the use of tarpaulins as a means of closing its side walls to facilitate unloading through them.

Figure 2 is a schematic view of a platform 5 which in relation to the known platform 1, incorporates a vertically movable structure 6 to apply pressure on to the pallet load 3, hence preventing its movement during transport. As we will see further on, said structure, which is also known in the art, is activated hydraulically according to this invention. The incorporation of said structure 6, as a false ceiling inside the platforms allows, even if tarpaulins are used as a means to close the side walls, that the platform 5 resembles more platforms of the type known in refrigerating trucks than those known as bottle carryers, illustrated in Figure 1.

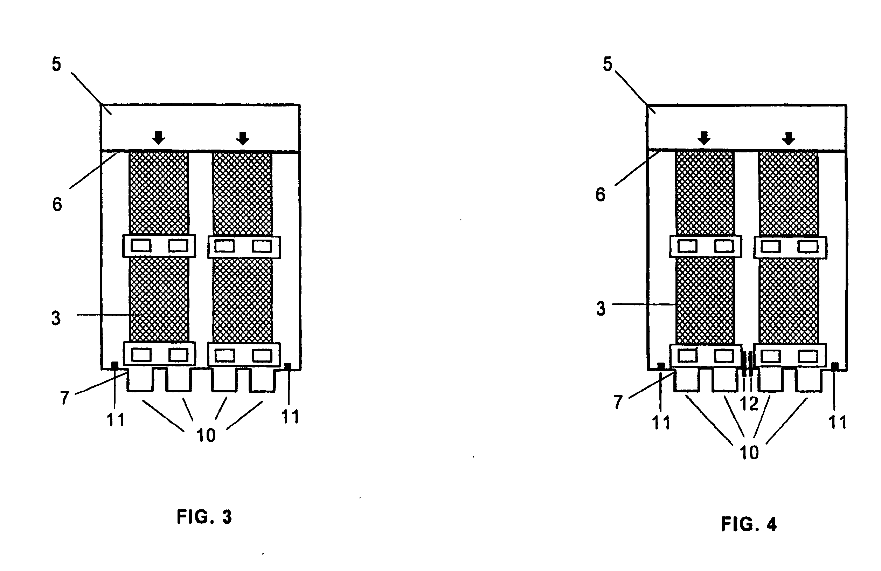

Following figure 3, the first object of the invention, refers to a specific configuration of base 7 of platform 5, which includes four sunken rails 10 arranged longitudinally in the central areas envisaged for two rows of pallets. Moreover, base 7 includes two protruding longitudinal sleepers 11 next to its side ends and in its central area, and two rows of gudgeons 12 hydraulically activated to be vertically displaced, above and below the base. This configuration of the base of the platform responds to several purposes. On the one hand, the mentioned rails 10 may consist of beams integrating the resistant structure of the platform base. On the other, the base is multifunctional so as to use conventional pallet loading/unloading systems and computerised ones for loading/unloading in a single operation. In the first case, the sole function of the rails 10 is resistance, the sleepers 11 and the gudgeons 12 being used as side retaining and guidance components for the pallets. In the second case, especially when devices are used which employ mobile means, such as forks to be introduced and removed from the truck, said rails 10 provide the means of guidance necessary for said forks. In this case, the gudgeons 12 are moved to a position beneath the base.

On the other hand, it will be observed that the first object of the invention, is closely related to, an application of pressure by the structure 6 which requires a substantially horizontal position of the pallets.

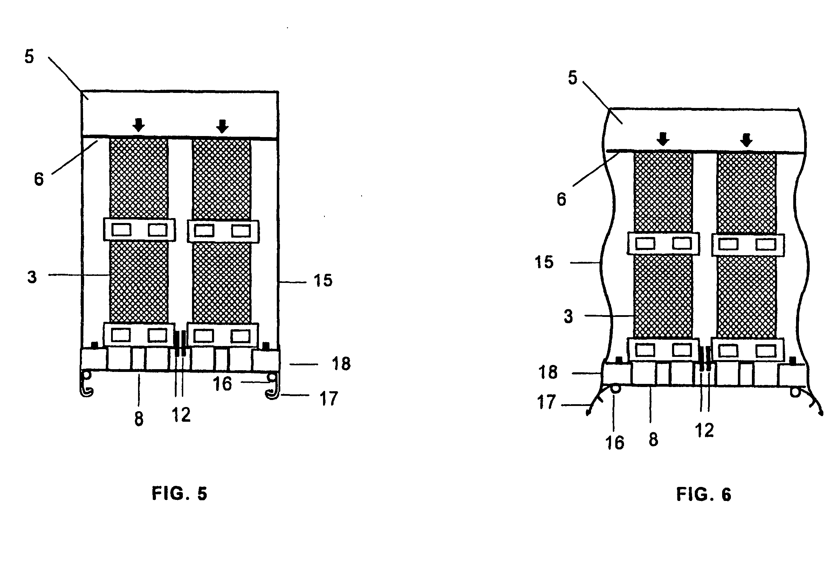

According to Figures 5 and 6, it is observed that by using tarpaulins 15 or other more flexible means with webbing 18, as closing devices of the side walls of the platform 5, the second object of the invention consists of the incorporation to the lower part 8 of base 7 of the platform 5, brackets 16, hydraulically activated to tighten/untighten the tarpaulins 15, co-operating with the ends 17 of their webbing 18. In this sense, Figure 5 shows a platform 5 with the tarpaulins 15 tightened and Figure 6 does so with the tarpaulins 15 untightened.

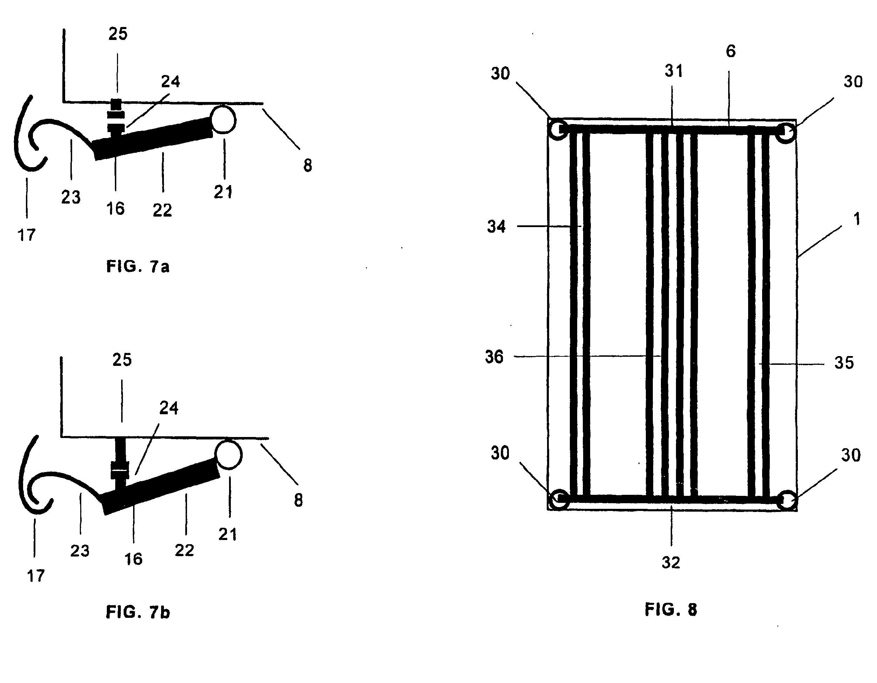

Figure 7a shows a preferred embodiment of the brackets 16 consisting of a bar 22 finishing in a hook 23 joined to the lower part 8 of the platform base by means of a body 21 with a spring, not shown in the figure. Said brackets 16 tighten the tarpaulins, co-operating with the ends 17 of their webbing 18, by means of pistons 25 located in base 8 of platform 5 which push the brackets 16 downwards, co-operating with the bodies 24 as shown in figure 7b.

Figure 8 shows a specific embodiment of the load fastening structure 6, consisting of a framework of beams 31, 32, 34, 35, 36, vertically movable by means of pistons 30.

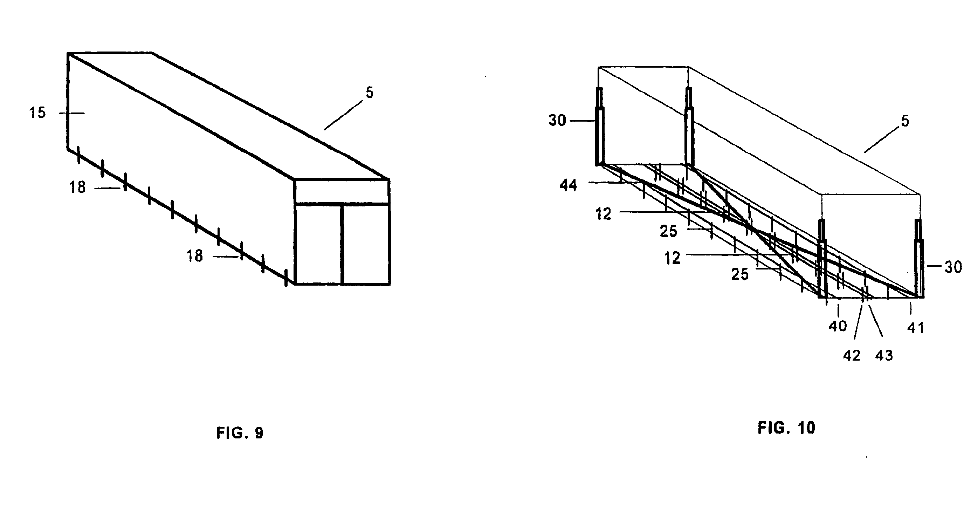

The use, on the one hand, of structure 6 to fasten the load, arranged on platform 5 as a mobile false ceiling, and on the other, of the brackets 16 to tighten the webbing 18 of the tarpaulins, provides a platform 5 whose side surfaces, as shown schematically in Figure 9, are suitable, in almost all their surfaceto integrate advertising supports as occurs in trucks of the refrigerating type.

As has already been said, structure 6, the central row of gudgeons 12 and the brackets 16 are hydraulically activated. Figure 10, schematically shows said activation devices including a high pressure circuit 44 to activate the pistons 30 which vertically move the structure 6; two low pressure circuits 40, 41 to activate the pistons 25 which cooperate with the brackets 16; two low pressure circuits 42, 43, which vertically displace the gudgeons 12; and a hydraulic pump, not shown in the Figure. It has been foreseen that platform 5 includes a control board, not shown in the figure, to facilitate the activation of the mentioned devices.

The semitrailer platform of this invention has several advantages compared with known platforms and particularly, the acceleration of the goods loading/unloading processes, both on eliminating the need of several manual operations either to fasten/release the load or to close/open the side walls, as well as allowing the permit the execution of automatic loading/unloading operations. Likewise, the possibilities of using this platform as an advertising support are extended compared with known platforms.

Although an embodiment of the invention has been shown and described, it is obvious that modifications may be introduced included within its scope, said scope not being limited by the embodiment but by the content of the following claims.

## Claims

1. A platform for truck semitrailers with a prismatic-rectangular shape, having a base (7), a ceiling, a front wall and a rear wall with a door facilitating rear access to the platform, said platform including a vertically movable structure (6) parallel to the ceiling for fastening the load, **characterised in that** the platform base (7) includes four sunken rails (10) arranged longitudinally, two protruding longitudinal sleepers (11) next to the side ends of the base (7)and two rows of gudgeons (12) in the central area of the base (7) hydraulically activated to move vertically above and below the base (7).

2. A platform for truck semitrailers, according to claim 1, **characterized in that** it includes tarpaulins (15) with webbing (18), or other flexible devices, as means to close/open the side walls of the platform, wherein in the lower part (8) of the platform base (7), there are brackets (16) hydraulically activated to tighten/loosen said tarpaulins (15), or other flexible devices, co-operating with the ends (17) of their webbing (18) or equivalent means arranged in said tarpaulins (15).

3. A platform for truck semitrailers, according to the claims 1 or 2, **characterised in that** it includes hydraulically activated devices for activating said vertically movable structure (6), said rows of gudgeons (12) and said brackets (16).

## Patentansprüche

1. Plattform für LKW-Sattelauflieger mit einer prismatischrechteckigen Form, die eine Basis (7) aufweist, eine Decke, eine vordere Wand und eine hintere Wand mit einer Tür zur Erleichterung des hinteren Zugangs zur Plattform, wobei die Plattform eine vertikal bewegbare Anordnung (6) parallel zur Decke zum Befestigen der Ladung aufweist, derartig **gekennzeichnet**, dass die Plattformbasis (7) vier eingelassene Schienen (10) aufweist, die in Längsrichtung angeordnet sind, zwei vorstehende Längs-Unterzüge (11) in der Nähe der Seitenenden der Basis (7), und zwei Reihen von Zapfen (12) in dem zentralen Bereich der Basis (7), die hydraulisch angetrieben werden, um sich in Vertikalrichtung nach oberhalb und unterhalb der Basis (7) zu bewegen.

2. Plattform für LKW-Sattelauflieger nach Anspruch 1, **dadurch gekennzeichnet, dass** sie Planen (15) mit Gurten (18) aufweist, oder andere flexible Einrichtungen, als Vorrichtungen zum Schließen bzw. Öffnen der Seitenwände der Plattform, wobei in dem unteren Teil (8) der Plattformbasis (7) Arme (16) vorgesehen sind, die hydraulisch angetrieben werden, um die Planen (15) anzuziehen bzw. zu lösen, oder andere flexible Einrichtungen, die mit den Enden (17) ihres Gurtes (18) zusammenwirken, oder äquivalente Vorrichtungen, die in den Planen (15) angeordnet sind.

3. Plattform für LKW-Sattelauflieger nach Anspruch 1 oder 2, **dadurch gekennzeichnet, dass** sie hydraulisch angetriebene Einrichtungen zum Antreiben der vertikal bewegbaren Anordnung (6) der Reihen von Zapfen (12) und der Arme (16) aufweist.

## Revendications

1. Plate-forme pour semi-remorques de camion de forme prismatique rectangulaire, comportant une base (7), un plafond, une paroi avant et une paroi arrière avec une porte facilitant l'accès à la plate-forme par l'arrière, ladite plate-forme comprenant une structure mobile verticalement (6) parallèle au plafond pour fixer la charge, **caractérisé en ce que** la base de la plate-forme (7) comprend quatre rails enfoncés (10) disposés longitudinalement, deux dormants longitudinaux saillants (11) près des extrémités latérales de la base (7) et deux rangées de goujons (12) dans la région centrale de la base (7) actionnés hydrauliquement pour se déplacer verticalement au dessus et au dessous de la base (7).

2. Plate-forme pour semi-remorques de camion selon la revendication 1, **caractérisée en ce qu'**elle comprend des bâches (15) avec des sangles (18), ou autres dispositifs flexibles, comme moyen pour fermer/ouvrir les parois latérales de la plate-forme, dans laquelle, dans la partie inférieure (8) de la base (7) de la plate-forme, sont prévus des supports (16) actionnés hydrauliquement pour tendre/relâcher lesdites bâches (15), ou autres dispositifs flexibles, coopérant avec les extrémités (17) de leurs sangles (18) ou moyen équivalent placé dans lesdites bâches (15).

3. Plate-forme pour semi-remorques de camion selon la revendication 1 ou 2, **caractérisée en ce qu'**elle comprend des dispositifs actionnés hydrauliquement pour activer ladite structure mobile verticalement (6), lesdites rangées de goujons (12) et lesdits supports (16).
